Europäisches Patentamt

European Patent Office

Office européen des brevets

(19)

(11) Veröffentlichungsnummer: **0 051 264 B1**

(12) **EUROPÄISCHE PATENTSCHRIFT**

(45) Veröffentlichungstag der Patentschrift:
12.12.84

(21) Anmeldenummer: **81109100.8**

(22) Anmeldetag: **28.10.81**

(51) Int. Cl.³: **C 08 J 3/02**, C 08 L 33/26, F 15 D 1/00

(54) Verfahren zum Lösen von Granulaten aus Polyacrylamidgelen in turbulenten Strömungen.

(30) Priorität: **05.11.80 DE 3041675**

(43) Veröffentlichungstag der Anmeldung:
**12.05.82 Patentblatt 82/19**

(45) Bekanntmachung des Hinweises auf die Patenterteilung:
**12.12.84 Patentblatt 84/50**

(84) Benannte Vertragsstaaten:
**BE DE FR NL**

(56) Entgegenhaltungen:
**EP - A - 0 003 821**
**CH - A - 586 258**
**DE - A - 2 647 078**
**US - A - 4 113 688**

(73) Patentinhaber: **HOECHST AKTIENGESELLSCHAFT,
Postfach 80 03 20, D-6230 Frankfurt am Main 80 (DE)**

(72) Erfinder: **Interthal, Werner, Dr.,
Dr.-Ludwig-Opel-Strasse 62, D-6090 Rüsselsheim (DE)**
Erfinder: **Wilski, Hans, Dr., Händelstrasse 18, D-6232 Bad
Soden am Taunus (DE)**

## Beschreibung

Es ist allgemein bekannt, daß turbulent strömende Flüssigkeiten an den sie begrenzenden Wänden einen Reibungswiderstand erfahren und, daß man diesen Reibungswiderstand durch Zusatz geringer Mengen bestimmter Stoffe drastisch herabsetzen kann. Stoffe, die diese Verringerung des Reibungswiderstandes bewirken, werden als »Strömungsbeschleuniger« (im folgenden mit »SB« abgekürzt) bezeichnet. Für verschiedene Flüssigkeiten haben sich verschiedene Strömungsbeschleuniger bewährt. Für Wasser sind z. B. Polyoxyäthylen, Kaliumpolyphosphat und Polyacrylamid als SB empfohlen worden. Von besonders guter Wirkung sind bestimmte Polyacrylamid-Sorten. Es bietet sich daher an, diese Polyacrylamid-Sorten als SB beim hydraulischen Feststoff-Transport einzusetzen. Unter »hydraulischem Feststoff-Transport« versteht man hierbei die Förderung von Erde, Erz, Gangart, Gesteinsmehl, Kohle, Sand usw. mit Hilfe von Wasser durch Rohrleitungen. Diese Transportart weist gegenüber dem Transport mit Schiffen oder Eisenbahnwagen in vielen Fällen Vorteile auf. Man kann nun den hydraulischen Feststoff-Transport noch weiter verbessern, indem man dem Transportwasser Strömungsbeschleuniger zusetzt. Hierdurch läßt sich z. B. eine bedeutende Erhöhung der Strömungsgeschwindigkeit oder eine erhebliche Einsparung an Energie erzielen. Außer dem hydraulischen Feststoff-Transport gibt es noch eine Reihe weiterer Anwendungsgebiete für SB, von denen nur der Kapseltransport, die schnelle Förderung von Abwässern und die Erhöhung der Spritzweite als Beispiel genannt seien.

Für alle praktischen Anwendungen muß der SB in eine geeignete Anwendungsform gebracht werden. Bei Polymeren empfiehlt sich die Herstellung einer Stammlösung hoher Konzentration, die dann mit einer Pumpe in den Hauptstrom eingespeist wird. Die Höhe der Konzentration ist bei Polymeren meist durch die mit der Konzentration rasch ansteigende Viskosität begrenzt. Wählt man Polyacrylamide (Homo- oder Copolymerisate, zumeist teilverseift), insbesondere solche, die nach GB-PS 1 317 408 oder EP-A-0 024 012 bei ihrer Herstellung eine Gelphase durchlaufen haben, so läßt sich äußerstenfalls eine Stammlösung mit einer Konzentration von etwa 0,5% anwenden. Lösungen dieser Konzentration sind mit einer Pumpe noch gerade so schonend zu fördern, ohne daß während der Förderung ein nennenswerter Scherabbau eintritt. Eine gewaltsame Förderung höher konzentrierter Stammlösungen ist zwar durchaus möglich, doch wird dabei stets ein Teil des Polymeren abgebaut und zerstört. Vor allem aber lösen sich die gewaltsam geförderten gelartigen Teilchen nicht mit genügender Geschwindigkeit bei ihrem Eintritt in den Hauptstrom, so daß sie auch aus diesem Grunde unwirksam bleiben.

Ein zweites Problem ist die geringe Lösegeschwindigkeit, die Polymere beim Lösen in Rührkessel entfalten. Dies gilt ganz besonders auch für Polyacrylamidgelgranulate. Für das Auflösen solcher Granulate sind in der Regel mindestens 2 Stunden Rührzeit erforderlich.

Wählt man aus diesen Gründen eine Konzentration um 0,5% oder weniger für die Stammlösung, so benötigt man wegen der geringen Lösegeschwindigkeit beim technischen Einsatz unhandlich große Lösestationen. Diese Lösestationen können sogar so groß werden, daß sie ihrerseits die Anwendung von Strömungsbeschleunigern für den genannten Zweck wieder in Frage stellen. Bei einer Förderung von 10 000 $m^3$/h Sand-Wasser-Gemisch mit einem Zusatz von 40 g SB/$m^3$ wären z. B. 2 Lösebehälter mit mindestens je 160 $m^3$ Inhalt erforderlich. Man muß daher versuchen, die Stammlösung konzentrierter zu machen und/oder die Lösegeschwindigkeit des Polymeren zu vergrößern. Beide Einflüsse führen zu einer Verkleinerung der Lösestation. Bei diesen Maßnahmen müssen aber unter allen Umständen die Fließfähigkeit und die Verdünnbarkeit der SB-Lösung erhalten bleiben.

Eine Möglichkeit, die Konzentration von Polyacrylamidlösungen zu erhöhen, ohne deren Viskosität zu verändern, ist bereits bekannt. So kann man nämlich bei Zusatz von Salzen die Konzentration an Polyacrylamid in gewissem Umfang erhöhen, ohne die Viskosität der Lösung heraufzusetzen. In der Literatur (H. A. Stuart (Herausgeber), Die Physik der Hochpolymeren, Springer-Verlag, Heidelberg 1953, Bd. 2, Seite 695 ff.) ist beschrieben, daß sich für diesen Zweck Alkalihalogenide und andere Salze eignen. Hierbei bietet sich die Verwendung von Meerwasser bei am Meer gelegenen Spüleinrichtungen von selber an. Man kann auf diese Weise den Raumbedarf einer Lösestation verringern. Da die Lösegeschwindigkeit durch Salzzusatz aber nicht heraufgesetzt wird, läßt sich auf diese Weise kein wirklicher technischer Fortschritt erzielen.

Überraschenderweise wurde nun gefunden, daß man Polyacrylamidgelgranulate sehr rasch in eine für die Anwendung als SB geeignete Form bringen kann, wenn man das Granulat mit verdünnten, wäßrigen Lösungen bestimmter Metallsalze kurze Zeit in Berührung bringt, wobei sich Quellkörper bilden, die sich leicht in der turbulenten Strömung lösen.

Gegenstand der Erfindung ist somit ein Verfahren zum Lösen von Granulaten von Polyacrylamidgelen in turbulenten Strömungen, das darin besteht, daß man das Granulat 2 bis 20 Minuten lang mit einer wäßrigen Lösung behandelt, die 0,02 bis 2 Gew.-% eines oder mehrerer Salze mit einem zwei- oder dreiwertigen Kation enthält und die dabei erhaltene Suspension von Quellkörpern direkt in die turbulente Strömung einspeist.

Bei dieser Behandlung mit einer Salzlösung löst sich erstaunlicherweise das Polyacrylamidgel nicht auf, sondern es bilden sich Quellkörper. Diese Quellkörper bestehen aus aufgequollenen Granulatkörnern, die von einem dünnen Häutchen umschlossen sind. Die Häutchen bilden sich unter der Einwirkung der Salzlösung. Offenbar sind die Häutchen durchlässig für Wasser bzw. für die Salzlösung, so daß diese in das Innere der Quellkörper eindringen können. Dieser ganze Vorgang läuft verhältnismäßig schnell ab. Bringt man z. B. ein Gelgranulat von 1–3 mm Korngröße, das aus 33% teilverseiftem Polyacrylamid und 67% Wasser besteht, und das nach DE-AS 2 143 549 hergestellt wurde, in eine 0,5%ige wäßrige Lösung von Aluminiumsulfat, so erhält man überraschenderweise bereits nach 10 Minuten Einwirkdauer eine Quellkörpersuspension, bei der die Quellkörper aus einer Lösung von 5 bis 6% Polyacrylamid in salzhaltigem Wasser, umschlossen von einem Häutchen, bestehen. Bei richtiger Wahl aller Parameter liegen diese Quellkörper in der Salzlösung ohne miteinander zu verkleben und ohne zu platzen.

Als geeignet für die Bildung der Quellkörper haben sich nur Salze mit zwei- oder dreiwertigen Kationen erwiesen, entweder allein oder in Mischung miteinander. Salze mit einwertigen Kationen sind allein für die Herstellung der Quellkörper ungeeignet. Man kann aber die Wirkung der Salze zwei- und dreiwertiger Kationen durch Zusatz von Salzen einwertiger Kationen noch etwas verbessern, da die so hergestellten Quellkörper sich leichter verdünnen lassen.

Die chemische Natur der Anionen spielt dagegen nur eine untergeordnete Rolle. Bewährt haben sich z. B. Chloride, Nitrate, Sulfate und Phosphate. In den Beispielen wird eine Reihe von brauchbaren Salzen genannt. Besonders erwähnt seien die reinen Salze Magnesiumsulfat, Zinksulfat, Kupfersulfat, Eisen-II-chlorid und Aluminiumsulfat sowie die Salzmischungen Magnesiumchlorid/Kaliumchlorid, Kobaltnitrat/Natriumnitrat und Aluminiumsulfat/Kaliumsulfat sowie Eisen-III-sulfat/Ammoniumsulfat bzw. die entsprechenden Alaune.

Auszuschließen sind alle Salze, die in wäßriger Lösung oxidierende oder reduzierende Eigenschaften besitzen oder den pH-Wert nennenswert ändern. Salze, die aufgrund dieser Eigenschaften die Bildung der Quellkörper verhindern, sind z. B. Kaliumpermanganat oder Kaliumbichromat sowie Zinkchlorid, Aluminiumchlorid, Eisen-III-chlorid und Zinn-IV-chlorid.

Der Konzentrationsspielraum, innerhalb dessen sich einwandfreie, leicht verdünnbare Quellkörper bilden, hängt von der Art des gewählten Salzes ab. Bei zu kleiner Konzentration bilden sich überhaupt keine Quellkörper. Bei etwas höherer Konzentration bilden sich Quellkörper, die durch übermäßige Wasseraufnahme sofort platzen. Bei zu hoher Konzentration wiederum bilden sich zwar Quellkörper, aber der ganze Vorgang läuft sehr langsam ab und führt schließlich zu sehr harten Quellkörpern mit harten Häutchen, die einer Auflösung Widerstand leisten. Die Salzkonzentration ist außerdem von der Menge und dem Wassergehalt des eingesetzten Gelgranulates abhängig. Gute Quellkörper bilden sich im allgemeinen bei Salzkonzentrationen von 0,02 bis 2%, vorzugsweise 0,1 bis 0,5%, sofern man 2 bis 15%, vorzugsweise 5 bis 10% eines Polyacrylamidgels mit einem Wassergehalt von 20 bis 85%, vorzugsweise 50 bis 80% einsetzt. Außerhalb dieser Bereiche bilden sich zwar auch Quellkörper, doch haben diese weniger günstige Eigenschaften.

Eine ähnlich wichtige Rolle wie die Konzentration spielt die Dauer der Einwirkung der Lösung auf das Granulat. Bei sehr kurzer Einwirkungszeit bilden sich Quellkörper mit hoher Polyacrylamidkonzentration und sehr dünne Häutchen. Solche Quellkörper gehen beim Fördern durch eine Rohrleitung leicht kaputt, sie verkleben und ergeben schließlich ein nicht mehr verdünnbares Gel. Bei zu langer Einwirkungszeit entstehen Quellkörper niedriger Konzentration mit sehr dicken Häutchen, die »durchgehärtet« und nur noch teilweise oder auch gar nicht mehr in Lösung zu bringen sind. Außerdem erfordert eine lange Einwirkungszeit voluminöse Lösestationen, während es ja das Ziel der erfindungsgemäßen Quellkörperherstellung ist, diese zu verkleinern. Für die Bildung guter Quellkörper sind — bei den obengenannten Konzentrationen — 2 bis 20, vorzugsweise 5 bis 10 Minuten erforderlich. Und zwar ist es so, daß gute Quellkörper um so schneller gebildet werden, je kleiner die Salzkonzentration innerhalb des angegebenen Bereiches ist.

Der Begriff »Polyacrylamidgele« umfaßt auch teilverseifte Polyacrylamidgele, wie sie dem Fachmann hinreichend bekannt sind (s. GB-PS 1 317 408, EP-A-0 024 012, DE-AS 2 143 549 und DE-OS 2 807 709 und EP-A-0 003 821). Die so hergestellten Polyacrylamid-Gelgranulate werden im allgemeinen auf einen Wirkstoffgehalt von 25 bis 40 Gew.-% eingestellt.

Die leichte Herstellbarkeit und die günstigen Eigenschaften machen die Quellkörper zu einer vorzüglich geeigneten Anwendungsform des Polyacrylamidgels als Strömungsbeschleuniger. Eine Quellkörpersuspension läßt sich nämlich fast ebenso leicht fördern wie reines Wasser, obwohl sie 2 bis 3% Polyacrylamid enthält. Man kann eine solche Dispersion mit einer Pumpe direkt in die turbulente Strömung einspeisen. Die Quellkörper nehmen in dem dort vorhandenen salzarmen Wasser schnell übermäßig viel Wasser auf, zerplatzen und geben ihren Inhalt an die Umgebung ab, wo sie sich rasch lösen.

In einer Verfahrensvariante kann man auch die suspendierten Quellkörper zerquetschen, beispielsweise zwischen zwei Walzen, und erhält so eine Suspension von Schlieren aus konzentrierter Polyacrylamidlösung in der Salzlösung, die sich wiederum schnell mit einer Pumpe in den Hauptstrom einspeisen läßt. Die Schlieren neigen zwar dazu, sich wieder mit einem neuen Häutchen zu umgeben, doch braucht dieser Vorgang Zeit. Da die Förderung der Schlierensuspension in den Hauptstrom aber nur wenige Sekunden beansprucht, gelingt es ohne weiteres, die »nackten« Schlieren einzuspeisen. Im Hauptstrom wird der Salzgehalt sofort drastisch herabgesetzt (auf 10 bis 20 ppm) und damit unwirksam gemacht. Die Schlieren lösen sich in wenigen Sekunden in der turbulenten Strömung des Hauptstroms, so daß der Strömungsbeschleuniger seine Wirkung bereits nach wenigen Metern Rohrlänge voll entfalten kann.

Man kann aber auch — in einer weiteren Verfahrensvariante — unmittelbar vor dem Zerquetschen der Quellkörper die Mutterlauge abziehen und durch reines Wasser ersetzen. In diesem Fall besteht naturgemäß nicht mehr die Gefahr einer erneuten Häutchenbildung nach dem Zerquetschen. Allerdings sind die Quellkörper in reinem Wasser nicht stabil, so daß das Zerquetschen unmittelbar nach dem Wasseraustausch erfolgen muß. Eine schnelle Förderung der Schlierensuspension ist auch in diesem Falle erforderlich, da die sich auflösenden Schlieren sonst wieder eine konzentrierte, nicht mehr ohne Abbau förderbare und nicht mehr ohne weiteres verdünnbare Lösung ergeben. Die abgezogene Mutterlauge kann nach dem Anreichern wieder zur Quellkörperherstellung verwendet werden. Dies hat außerdem den Vorteil der verbesserten Wirtschaftlichkeit und Umweltfreundlichkeit, da damit ein Teil des eingesetzten Salzes im Kreislauf geführt und nicht ausgetragen wird.

Für die technische Durchführung lassen sich handelsübliche Apparate verwenden. Am günstigsten ist die kontinuierliche Herstellung der Quellkörper in einer Förderschnecke. Wenn man z. B. 400 kg SB/h in Form einer 2%igen Quellkörpersuspension herstellen will und für die Ausbildung der Quellkörper 10 Minuten ansetzt, dann muß die Schnecke ein Volumen von 3,3 m³ fassen können. Eine entsprechende Lösestation mit 2 Rührkesseln würde vergleichsweise ein Fassungsvermögen von mindestens 320 m³ aufweisen müssen. Der Raumbedarf einer Löseeinrichtung, die nach dem erfindungsgemäßen Quellkörperverfahren arbeitet, beträgt also nur rund 1% von dem des herkömmlichen Bedarfs. Die Quellkörper können entweder direkt in den Hauptstrom eingespeist oder am Ende der Förderschnecke entweder durch entsprechende Gestaltung der Schneckengänge oder in einer getrennten Vorrichtung zerquetscht werden. Die entstandene Schlierensuspension kann dann mit einer Pumpe beliebiger Bauart in den Hauptstrom gefördert werden.

## Beispiel 1

Die Herstellung der Suspension der Quellkörper erfolgt auf einfache Weise, indem man die benötigte Menge an Polyacrylamidgranulat in die wäßrige Salzlösung gibt und die zur Ausbildung der Quellkörper erforderliche Zeit abwartet. Langsames Anrühren verbessert die Gleichmäßigkeit der Quellkörper.

Die folgende Tabelle zeigt, wie sich die Quellkörper im Laufe der Zeit entwickeln:

In 1 Liter wäßrige Kaliumaluminiumsulfatlösung werden 60 Gramm gepudertes, teilverseiftes Polyacrylamidgelgranulat nach DE-OS 2 143 549 Beispiel 1 (0,5- bis 5-mm-Körner) mit einem Gehalt von 33% Wirkstoff (Rest: Wasser, Salze) eingeworfen. Die Quellkörper entwickeln sich wie folgt:

0,5% Kaliumaluminiumsulfatlösung in Wasser

| Zeit | Konzentration Polyacrylamid im Quellkörper | Überstehende Mutterlauge | Bemerkungen |
|---|---|---|---|
| min | % | cm³ | |
| 0 | 33 | 1000 | |
| 5 | 7,4 | 790 | |
| 10 | 6,3 | 740 | Bildung von guten, leicht löslichen Quellkörpern |
| 15 | 5,6 | 700 | |
| 20 | 5,0 | 660 | |
| 40 | 3,7 | 520 | |
| 80 | 2,5 | 270 | Quellkörper geplatzt |

1% Kaliumaluminiumsulfatlösung in Wasser

| Zeit | Konzentration Polyacrylamid im Quellkörper | Überstehende Mutterlauge | Bemerkungen |
|---|---|---|---|
| min | % | cm³ | |
| 0 | 33 | 1000 | |
| 5 | 9,5 | 850 | |
| 10 | 8,3 | 820 | |
| 15 | 7,4 | 790 | |
| 20 | 7,1 | 780 | Bildung von guten, leicht löslichen Quellkörpern, jedoch mit dickerer Haut als vorher |
| 40 | 5,9 | 720 | |
| 100 | 5,6 | 700 | |
| 300 | 5,1 | 670 | dickhäutige Quellkörper |

## Beispiel 2

Die in Beispiel 1 mit einer Konzentration von 0,5% Aluminiumkaliumsulfat in 10 min hergestellten Quellkörper wurden direkt in die in DE-OS 2 807 709, Fig. 1, beschriebene Strömungsapparatur eingebracht, so daß dort eine Konzentration von 20 ppm entstand. Nach 2 min war der Druckverlust, gemessen an 1 m Rohrleitung von 1 cm Durchmesser, auf 1/5 des Ausgangswertes abgefallen.

Die gleiche Druckverlustminderung ergab sich bei Verwendung einer durch 2,5stündiges Rühren hergestellten 0,5%igen Stammlösung bei Verdünnen auf 20 ppm in der gleichen Apparatur. Dies zeigt, daß das Gel als Quellkörpersuspension die gleiche Wirkung hat wie durch Rühren hergestellte Stammlösung.

## Beispiel 3

Ähnlich wie in Beispiel 1 wurden je 60 g des Polyacrylamidgelgranulats in 1 Liter 0,5%ige Salzlösung, hergestellt aus den in der Tabelle aufgeführten Salzen, gegeben. Es bildeten sich in allen Fällen Quellkörper, die nach 10 Minuten optimal ausgebildet waren.

| Salz | Überstehende Mutterlauge nach 10 min cm$^3$ | Bemerkungen |
|---|---|---|
| Kobalt-II-nitrat | 800 | |
| Kupfersulfat | 790 | |
| Zinksulfat | 780 | |
| Magnesiumsulfat | 690 | Quellkörper z. T. geplatzt |
| Eisen-II-chlorid | 840 | |
| Aluminiumsulfat | 780 | |
| Eisenammoniumsulfat | 820 | |
| Chromkaliumsulfat | 790 | Quellkörper nicht gut verdünnbar (Oxydation!) |

Gegenbeispiele mit einwertigen Kationen:

| | | |
|---|---|---|
| Natriumchlorid | — | Verkleisterung der Granulate |
| Kaliumsulfat | — | Verkleisterung der Granulate |

## Beispiel 4

Ähnlich wie in Beispiel 1 wurden Quellkörper in 0,1%iger Zinksulfatlösung mit 10 min Einwirkungszeit hergestellt. Die Quellkörper wurden zusammen mit ihrer Mutterlauge in die in Anmeldung DE-OS 2 807 709, Fig. 1, beschriebene Strömungsapparatur gefüllt, und zwar so, daß sich dort eine Konzentration von 50 ppm SB bildete. Nach Umpumpen während 1 Minute sank der Druckverlust auf 1/5 des Ausgangswertes. Bei einem zweiten Versuch wurden in der gleichen Weise wie vorher Quellkörper hergestellt, diese aber vor dem Einfüllen in die Strömungsapparatur in ihrer Mutterlauge zerquetscht. Nach Umpumpen während 0,3 min sank der Druckverlust auf 1/5 des Ausgangswertes.

Bei einem dritten Versuch wurde der gleiche Strömungsbeschleuniger in der gleichen Konzentration wie vorher, aber in Form einer Stammlösung zugegeben. Die Stammlösung mußte durch 3stündiges langsames Rühren mit einem Blattrührer hergestellt werden und hatte eine Konzentration von 0,4%. Mit dieser Stammlösung erhielt man die gleiche Wirkung bei gleicher Konzentration wie mit der zuvor beschriebenen Suspension an Quellkörpern.

## Beispiel 5

Es wurde genauso wie in Beispiel 4 verfahren, nur wurde anstelle des Zinksulfats Magnesiumsulfat eingesetzt. Es ergaben sich die gleichen Zahlenwerte wie in Beispiel 4, die auch mit Calciumchlorid anstelle von Zinksulfat erhalten wurden.

## Beispiel 6

Für das Aufspülen eines Deiches sollen 10 000 m$^3$/h eines Sand-Wasser-Gemischs mit 20 Volumenprozent Sand durch eine Rohrleitung gefördert werden. Dem Gemisch sollen 40 g Strömungsbeschleuniger nach DE-OS 2 134 549, Beispiel 1, pro Kubikmeter zugesetzt werden, um eine Verdoppelung der Transportgeschwindigkeit zu erzielen. Verwendet man hierfür eine Stammlösung mit der maximal möglichen Konzentration um 0,5 Gewichtsprozent, so braucht man hiervon 80 m$^3$/h. Da die Lösezeit für das Gelgranulat mindestens 2 Stunden beträgt, sind für das Auflösen bei ununterbrochenem Betrieb der Rohrleitung mindestens zwei Lösestationen (Kessel mit Rührer) von je mindestens 160 m$^3$ Inhalt erforderlich, insgesamt also mindestens 320 m$^3$ Lösevolumen.

Verwendet man statt der Stammlösung eine erfindungsgemäße Quellkörpersuspension nach Beispiel 1, die 2 Gewichtsprozent Strömungsbeschleuniger in Form von Quellkörpern mit 6,3% Polyacryla-

6

0 051 264

mid enthält, so benötigt man, da sich diese Suspension in 10 Minuten bildet, bei kontinuierlichem Betrieb eine Lösestation von nur 3,3 m³ Rauminhalt, bei diskontinuierlichem Betrieb 2 Rührkessel von je 3,3 m³ Inhalt.

**Patentansprüche**

1. Verfahren zum Lösen von Granulaten aus Polyacrylamidgelen in turbulenten Strömungen, dadurch gekennzeichnet, daß man das Granulat 2 bis 20 Minuten lang mit einer wäßrigen Lösung behandelt, die 0,02 bis 2 Gew.-% eines oder mehrerer Salze mit einem zwei- oder dreiwertigen Kation enthält und die dabei erhaltene Suspension von Quellkörpern direkt in die turbulente Strömung einspeist.

2. Verfahren nach Anspruch 1, dadurch gekennzeichnet, daß man die Quellkörper vor ihrer Einspeisung in die turbulente Strömung zerquetscht.

3. Verfahren nach Anspruch 1, dadurch gekennzeichnet, daß man von der Suspension die überschüssige Salzlösung abzieht und durch Wasser ersetzt und diese Suspension in die turbulente Strömung einspeist.

4. Verfahren nach Anspruch 1, dadurch gekennzeichnet, daß man das Granulat mit einer wäßrigen Lösung von Salzen mit einem oder mehreren der zweiwertigen Kationen Magnesium, Calcium, Zink oder Eisen behandelt.

5. Verfahren nach Anspruch 1, dadurch gekennzeichnet, daß man das Granulat mit einer wäßrigen Lösung von Salzen mit einem oder mehreren der dreiwertigen Kationen Eisen oder Aluminium behandelt.

6. Verfahren nach Anspruch 1, dadurch gekennzeichnet, daß man das Granulat mit einer wäßrigen Lösung aus Metallsalzen mit zwei- oder dreiwertigen Kationen zusammen mit Salzen mit einem einwertigen Kation behandelt.

**Claims**

1. Process for dissolving granules of polyacrylamide gels in turbulent flow wich is characterized by treating the granules for 2 to 20 minutes with an aqueous solution containing 0.02 to 2% by weight of one or more salts with a bi- or tri-valent cation and feeding the thus obtained suspension of swollen granules directly into the turbulent flow.

2. Process as claimed in claim 1, which is characterized in that the swollen granules are squashed before they are fed into the turbulent flow.

3. Process as claimed in claim 1, which is characterized in that the excess solution of the salt is stripped off form the suspension of the swollen granules and is replaced by water and this suspension is fed into the turbulent flow.

4. Process as claimed in claim 1, which is characterized in that the granules are treated with an aqueous solution of salts with one or more of the bivalent cations magnesium, calcium, zinc or iron.

5. Process as claimed in claim 1, which is characterized in that the granules are treated with an aqueous solution of salts with one or more of the trivalent cations iron or aluminium.

6. Process as claimed in claim 1, which is characterized in that the granules are treated with an aqueous solution of metal salts with bi- or trivalent cations together with salts having a monovalent cation.

**Revendications**

1. Procédé pour dissoudre des granules de gels de polyacrylamide dans des écoulements turbulents, caractérisé en ce qu'on traite le granulé pendant 2 à 20 minutes à l'aide d'une solution aqueuse qui contient 0,02 à 2% en poids d'un ou plusieurs sels possédant un cation bivalent ou trivalent, et que l'on injecte directement dans l'écoulement turbulent la suspension ainsi obtenue de corps de gonflement.

2. Procédé selon la revendication 1, caractérisé en ce qu'on écrase les corps de gonflement avant leur injection dans l'écoulement turbulent.

3. Procédé selon la revendication 1, caractérisé en ce qu'on extrait de la suspension des corps de gonflement la solution saline en excès, et qu'on la remplace par de l'eau, et que l'on injecte cette suspension dans l'écoulement turbulent.

4. Procédé selon la revendication 1, caractérisé en ce qu'on traite le granulé avec une solution aqueuse de sel d'un ou plusieurs des cations bivalents magnésium, calcium, zinc ou fer.

5. Procédé selon la revendication 1, caractérisé en ce qu'on traite le granulé avec une solution aqueuse de sel d'un ou plusieurs des cations trivalents fer ou aluminium.

6. Procédé selon la revendication 1, caractérisé en ce qu'on traite le granulé avec une solution

7

aqueuse de sels métalliques possédant des cations bivalents ou trivalents, en même temps qu'un sel d'un cation monovalent.